# EUROPÄISCHE PATENTSCHRIFT

(11) **EP 0 336 073 B1**
(45) Veröffentlichungstag und Bekanntmachung des Hinweises auf die Patenterteilung: **28.12.1994**
(21) Anmeldenummer: 89102293.1
(22) Anmeldetag: 10.02.1989
(51) Int. Cl.: G02C 7/02, G02C 7/08

(54) **Miniteleskop-Brillenglas**
Minitelescopic ophthalmic lens
Lentille ophtalmique minitéléscopique

(30) Priorität: 06.04.1988 DE 8804514 U; 09.06.1988 DE 8807504 U; 10.11.1988 DE 8814084 U; 10.11.1988 DE 8814085 U
(43) Veröffentlichungstag der Anmeldung: 11.10.1989
(73) Patentinhaber: Gernet, Hermann, Prof. Dr. med., D-48151 Münster (DE)
(72) Erfinder: Gernet, Hermann, Prof. Dr. med., D-48151 Münster (DE)

(56) Entgegenhaltungen:
- WO-A-85/04260
- DE-C- 227 921
- DE-C- 233 345
- DE-U- 8 121 262
- DE-U- 8 807 504
- US-A- 2 025 893
- US-A- 3 592 525

## Beschreibung

Bekannte Fernrohre, Ferngläser und Mikroskope haben Luken und Blenden, weshalb das für den Benutzer resultierende Sehfeld (Gesichts-, Beobachtungsfeld) schon bei geringer Vergrößerung klein ist und z.B. bei einem üblichen Theaterglas (3-fach) nur 200 m auf 1000 m, also nur rund 11° beträgt. Bei stärkerer Fernrohr-Vergrößerung wird das Sehfeld zwangsläufig kleiner.

Fernrohre sind außerdem mit den Händen zu halten und zu richten, damit die hindurchblickenden Augen den gewünschten Gegenstand tatsächlich sehen. Beim Sehen durch Fernrohre werden nur die für scharfes Sehen zuständigen Anteile der Augennetzhaut benutzt, die übrigen großen und für das so wichtige Bewegungssehen zuständigen Netzhautanteile liegen beim Sehen durch Fernrohre und Mikroskope in funktioneller Hinsicht brach.

Bekannte afokale Gläser sind konvex-konkave Gläser erheblicher Dicke mit sphärisch gekrümmten Vorder- und Rückflächen, wobei die Vorderflächenkrümmung im Vergleich zur Rückflächenkrümmung nach bekannten optischen Gesetzen geringer sein muß. Definitionsgemäß sind afokale Gläser Gläser ohne Brennpunkt, d.h. parallel einfallende Lichtstrahlen verlassen das Glas ebenfalls wieder parallel, jedoch auf der konkaven Seite stärker gebündelt. In dieser Bündelung liegt für das menschliche Auge die Vergrößerungswirkung, weil durch die menschliche Augenpupille (gegebenen Durchmessers) ein Mehr an optischer Information auf die Augennetzhaut gelangt.

Allerdings ist die Vergrößerungswirkung bekannter Teleskop-Brillen mit großem Sehfeld, z.B. Deutsches Gebrauchsmuster G 81 21 262.3 (Gernet, Anmeldetag 20.07.81) mit Werten um 1.15 verhältnismäßig gering. Die Teleskop-Brille 1.15 aus G 81 21 262.3 hat bei einem Brechungsindex der Gläser von 1.50, einem Glasdurchmesser von 40 mm, einer axialen Dicke von 20 mm, und einer sphärischen Vorderflächenwölbung von 50 mm (+10.0 Dpt) eine sphärische Rückflächenkrümmung von 43.3 mm (-11.55 Dpt). Das Sehfeld beträgt 1300 m auf 1000 m Entfernung, es umfaßt 66°. Die geringe Vergrößerungswirkung von Teleskop-Brillen nach G 81 21 262.3 ist trotz des großen Sehfeldes wirtschaftlich nicht verwertbar.

Altere bekannte afokale Teleskope, z.B. US 2,346,002 (Bennet et al., 1944) haben ebenfalls merkbare Vergrößerungen. Wegen ihrer Tubusform und der durch diese bedingten Luken und Blenden resultiert ein kleines Sehfeld, auch können Fernrohre nach US 2,346, 002 wegen ihrer Länge, wegen ihres hohen Gewichtes und wegen ihrer Unhandlichkeit niemals in üblichen Brillengestellen getragen werden. Fernrohre nach US 2,346,002 sind deshalb im Sinne der eigenen Anmeldung wirtschaftlich nicht verwertbar. Es gibt zusammenfassend bisher keine Fernglasbrillen, die menschlichen Augen eine erhebliche Vergrößerung und gleichzeitig ein gewohntes oder zumindest ein relativ großes Sehfeld ermöglichen.

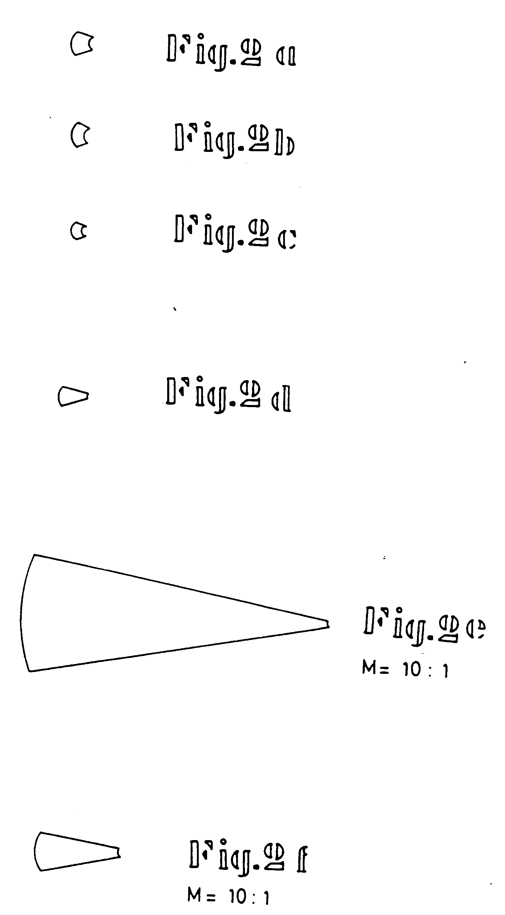

Weiterhin ist aus US 3,592,525 (Schultz 1971) eine Illuminationseinrichtung für Brillen mit zusätzlichen vergrößernden Linsen (Vergrößerungseinsatz) bekannt. Diese Brille hat zwar eine deutliche Vergrößerung durch den tubusförmigen Vergrößerungseinsatz für den Arbeitsabstand (Nähe) und gleichzeitig ein großes übliches Sehfeld im übrigen Brillenglasbereich, sie ist jedoch wie ähnliche Brillen (z.B. Keeler Augenarzt-Brille) keine Fernglas-Brille, weil sie für einen Arbeitsabstand von 20 cm gemacht ist, weshalb die Tubusachsen des Vergrößerungsteils ausdrücklich konvergent (Figur 2 und Text) sind. Schließlich sind die Vergrößerungseinsätze fokal und nicht afokal, weil für den Arbeitsabstand eine Fokussierung durch einen Nahzusatz von +5.0 Dpt erforderlich ist, damit der Benutzer in ihm scharf und vergrößert sieht. Die Brille nach US 3,592,525 für Zahn- und Augenärzte und ähnliche Brillen erlauben für Normalsichtige kein scharfes vergrößertes Sehen in die Ferne.

Wegen der vorhandenen Luken und Blenden der Vergrößerungseinsätze (-vorsätze) ist das resultierende Sehfeld klein, es beträgt z.B.für die Keeler Brille rund 12° im Nahabstand, für die Schultz-Brille ist es eher noch kleiner.

In die Ferne kann wegen der konvergenten Einstellung der Glasachsen kein Benutzer durch die Brille von Schultz (US 3,592,525) beidäugig sehen, wegen der Nahfokussierung (+5.0 Dpt) des Vergrößerungseinsatzes kann ein normalsichtiger Benutzer weder einnoch beidäugig auch nur annähernd scharf, sondern stets nur völlig unscharf und damit auch nicht vergrößert in des Wortes Bedeutung sehen.

Schließlich ist aus US - A - 2,025,893 ein Brillenglas zum Sehen in die Ferne beschrieben, bestehend aus einem üblichen Brilllenglas und einem darin zentriert angebrachten bildvergrößernden Einsatz. Die beiden dort genannten Linsen 10 und 11 bilden eine Einheit, die afokal ist und ein Teleskopglas darstellt.

Der Gegenstand des Anspruchs 1 der vorliegenden Erfindung unterscheidet sich von obigem bekannten Brillenglas gemäß US-A-20 25 893 dadurch, daß der Einsatz an seinem Umfang konusförmig ist, aus hochbrechendem Glas besteht, und die im kennzeichnenden Teil des Anspruchs 1 angegebenen Werte des Durchmessers, der axialen Dicke und der Vorder- und Rückflächenkrümmung aufweist. In US - A - 2,025,893 sind keine Werte für den Durchmesser des teleskopischen Einsatzes angegeben. Dieser erscheint jedoch, nach den Figuren dieser Patentschrift zu urteilen, als vergleichsweise groß. Gemäß US - A - 2,025,893 sind das "normale" Brillenglas 5 und der Einsatz 9 weitgehend als gleichberechtigt benützte Teile im Gesichtsfeld des Brillenträgers vorgesehen, weshalb in dieser Patentschrift die Brille mit diesen beiden Teilen auch als Bifokalglas bezeichnet wird. Unter diesen Umständen bestand für den Fachmann keinerlei Anlaß, den teleskopischen Einsatz erheblich kleiner zu machen, da hierbei die genannte gleichberechtigte Nutzbarkeit verlorengeht.
Der Gegenstand der vorliegenden Anmeldung geht insofern von einem ganz anderen Grundgedanken aus: die gesamten "gängigen" Aufgaben des Sehens werden beim Blick durch das Brillenglas üblicher Art oder Planglas wahrgenommen (die vorliegende Erfindung wendet sich ja auch vorwiegend an normalsichtige oder nahezu normalsichtige Benutzer), und der Teleskop-Einsatz dient zur Fixierung eines stark vergrößerten Details in speziellen Fällen, in denen ohnehin eine unbewegliche Kopfhaltung erforderlich ist. Damit wird das Hauptgesichtsfeld nur relativ wenig gestört, und es können dennoch in dem Teleskop-Einsatz erhebliche Vergrößerungen erreicht werden, ohne daß der Einsatz zu schwer wird.

Zur Verringerung der Störung des Hauptgesichtsfeldes trägt auch die konische Gestaltung des Einsatzes bei, ein Merkmal, zu dem in US - A - 2,025,893 ebenfalls keine Anregung gegeben wird.

Zusammenfassend gibt es bisher keine wirtschaftlich verwertbaren Fernglasbrillen mit großem Sehfeld.

### Aufgabenstellung und Lösung

Einstückige Fernrohre üblicher Art und andere afokalen Systeme stärkerer Vergrößerung sind relativ groß, schwer, unhandlich und deshalb nicht in üblichen Brillengestellen tragbar.

Ähnlich wie es durch die allgemein bekannte Miniaturisierung von Taschenrechnern im Verlauf des letzten Jahrzehnts demonstriert wurde, ist es das Ziel der vorliegenden Erfindung, Teleskop-Brillengläser mit erheblicher Vergrößerungswirkung und mit gleichzeitig großem Sehfeld für übliche Brillen (gewohntes Sehen) zu schaffen und derartige Teleskop-Brillengläser so zu verkleinern, daß sie als vergleichsweise winzige Einsätze in üblichen Brillengläsern getragen werden können und so gleichzeitig vergrößertes und gewohntes Sehen ermöglichen. Derartige Miniteleskop-Brillengläser sind in ihrer Vergrößerungswirkung für das normale menschliche Auge stärkeren Fernrohren und schwächeren Mikroskopen vergleichbar.

Bei optimaler Miniaturisierung und Zentrierung vor beiden Augen des Benutzers ermöglichen Miniteleskop-Brillengläser für Normalsichtige scharfes und vergrößertes Sehen in Ferne und Nähe ohne Krümmungsänderung auch bei Alterssichtigkeit, welch letztere für größere afokale Teleskop-Brillengläser eine zusätzliche Änderung einer der sphärischen Oberflächen zum Nahsehen (+ Dpt-Zusatz) erforderlich machen würde.

Derartige Miniteleskop-Brillengläser bilden zusammen mit den umgebenden üblichen Brillengläsern ein Mini-All-Entfernungs-Teleskop bzw. ein Mini-All-Entfernungs-Mikroskop.

Für einen Fachmann der Physik oder Optik ist die vorliegende Erfindung nicht naheliegend, denn sie wurde bisher trotz der Bekanntheit von US 2,346,002 (Bennet 1944) und von US 3,592,525 (Schultz 1971) und trotz zweifelsfreier weiter gewerblicher Anwendbarkeit bisher von niemand anderem als Anmeldung getätigt. Die Erfindung wird erst naheliegend, nachdem sie durch einen Nichtfachmann der Physik und Optik aufgrund seiner rein medizinischen Kenntnisse über Physiologie und Pathologie des menschlichen Sehens konzipiert, beschrieben und dabei in die Denkweise der Fachleute für Physik und Optik umgesetzt worden ist. Damit beruht die Anmeldung auf einer erfinderischen Tätigkeit, der Anmeldungsgegenstand ist neu und wirtschaftlich verwertbar.

### Beschreibung

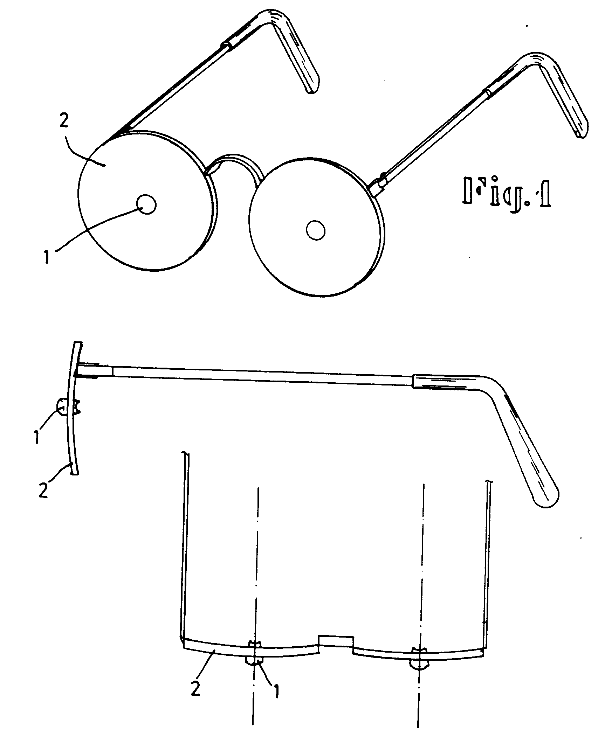

Nach Figur 1 ist das Miniteleskop-Brillenglas 1 so klein, daß es - praktisch ohne Luken und Blenden - nur für den für das scharfe Sehen zuständigen zentralen Netzhautanteil des Beobachterauges nutzbar ist.

Das Teleskop-Brillenglas kann deshalb in übliche Brillengestelle ähnlich US 3,592,252 (Schultz) für Normalsichtige, für Fehlsichtige in übliche Korrektionsgläser, am richtigen Ort, d.h. zentriert nach Vorschrift des Augenarztes oder Augenoptikers in bekannter Weise eingepaßt, eingeschliffen oder in entsprechende Löcher eingekittet, eingepaßt etc. werden. Definitionsgemäß sind in binokularen Teleskopen die Teleskopachsen parallel zueinander anzuordnen. Die Miniteleskop-Fernglasbrille hat also einen vergrössernden Teil für das zentrale scharfe Sehen, nämlich das dem Bereich Minioptik zugehörige Teleskop-Brillenglas ( 1 in Figur 1) und einen peripheren üblichen Brillenglasteil (2 in Figur 1) für das im täglichen Leben so wichtige Bewegungssehen.

Eine Miniteleskop-Fernglasbrille nach Figur 1 kann auch eingeschliffen gefertigt werden. Dies hat den Vorteil, daß z.B. für eine Rohglasherstellung eine übliche Brillenglasform mit zusätzlicher Miniteleskop-Brillenglasform verwendet werden kann. Löcher und Bohrungen werden so überflüssig. Die Miniteleskop-Brille ist vielfältig nutzbar, z.B. für Theater, Sportarena, für Landschaftsbetrachtung, Jagd, Fischfang etc., für berufliche Zwecke, z.B. Feinmechanik, Mikrochip-Herstellung, für Uhrmacher, Juweliere, für medizinische Zwecke, z.B. optische Hilfen für Sehgeschädigte und für mancherlei andere Zwecke. Der Anmeldungsgegenstand ist also vielfältig gewerblich anwendbar. Grund für die vielfältige Nutzbarkeit von Miniteleskop-Brillengläsern ist die gleichzeitige (real time) Ausnutzung aller, d.h. der zentralen und der peripheren funktionellen Möglichkeiten des menschlichen Auges. Deshalb sieht ein Benutzer mehr und besser als es ihm selbst modernste optische Medien zu sehen gestatten. Vergleichsweise ist des Benutzers Sehen und Wahrnehmen seiner Umwelt nicht nur so gut, sondern sogar besser als es beispielsweise das Sehen eines eingeladenen Stargastes in einer talkshow ist, dessen gleichzeitige (real time) optische Information über seine Umwelt im Fernsehstudio um ein vielfaches besser ist als es die optische Information des die show konsumierenden Fernsehzuschauers trotz aller Zoom,- Vergrößerungs- und Ausschnittsmöglichkeiten moderner Television sein kann. Schließlich können Miniteleskop-Brillengläser hoher Brechzahl und mit stark sphärisch gekrümmtem Innenradius , geringer axialer Dicke und mit demgemäß sehr starker Brechkraft der sphärischen Oberflächen , für einen bestimmten Arbeitsabstand in Fernglasbrillen entsprechend konvergent mit ihren Achsen eingebaut, als binoculare Mini-Mikroskope (Operationsmikroskope) benutzt werden, welche bei entsprechender Ausgestattung ohne Änderung einer sphärischen Oberflächenkrümmung ein stark vergrößertes Bild für Ferne und Nähe ermöglichen. Diese Gläser bilden All-Entfernungs-Mini-Mikroskope.

In den Figuren 2 a mit f werden Miniteleskop-Brillengläser verschiedener Ausgestaltung beschrieben, die, für die Ferne zentriert, in üblichen Brillengläsern einer Fernglasbrille nach Figur 1 getragen werden. Die Gläser sind unter Berücksichtigung von Teleskop-Brillenglas - Hornhautscheitelabstand und Augenpupille so gestaltet, daß ein möglichst großes Sehfeld resultiert.

Diejenigen Miniteleskop-Brillengläser, deren sphärische Innenkrümmung hoch (kleiner Innenkrümmungshalbmesser) ist, haben zwar zwangsläufig ein kleines Sehfeld, dafür aber eine starke Vergrösserung im Sinne eines Mini-Mikroskops und ein umso größeres gewohntes Sehfeld im nicht teleskopischen übrigen Brillenglasbereich.

Figur 2 a zeigt einen Miniteleskopglas-Einsatz aus hochbrechendem Glas mit dem Brechungsindex n = 2.020 im Längsschnitt.

Die sphärische Vorderflächenwölbung beträgt 0.00402 m ( 4.02 mm = +253,43 Dpt), die sphärische Rückflächenwölbung 0.0015 m (1.5 mm = -680.00 Dpt). Der größte Glasdurchmesser beträgt 0.006 m (6.0 mm) und die axialse Glasdicke 0.005 m (5.0 mm).

Dieses vor beiden Augen des Benutzers in einer Teleskop-Brille befindliche Miniteleskop-Brillenglas ist mit der Brechkraft 0 Dpt afokal. Es hat für ein normalsichtiges Auge mit der Dimension des Normalauges (Gernet 1973) die Vergrößerung 2.6827.

Figur 2 b zeigt einen Miniteleskopglas-Einsatz aus hochbrechendem Glas mit dem Brechungsindex 2.020 im Längsschnitt. Die sphärische Vorderflächenwölbung beträgt 0.00301 m (3.01 mm = 338.33 Dpt), die sphärische Rückflächenwölbung 0.0015 m (1.5 mm = -680.00 Dpt). Der größte Glasdurchmesser beträgt 0.0056 m (5.6 mm), die axiale Glasdicke beträgt 0.003 m (3.0 mm).

Dieses jeweils vor beiden Augen des Benutzers in einer Teleskop-Brille befindliche Miniteleskop-Brillenglas ist mit seiner Brechkraft von 0 Dpt afokal. Es hat für ein normalsichtiges Benutzerauge mit der Dimension des Normalauges die Vergrößerung 2.0095.

Figur 2 c zeigt einen Miniteleskopglas-Einsatz aus hochbrechenchendem Glas mit dem Brechungsindex 2.020 im Längsschnitt.

Die sphärische Vorderflächenwölbung beträgt 0.00201 mm (2.01 mm = +507.49 Dpt), die sphärische Rückflächenwölbung 0.001 m (1.0 mm = -1020.00 Dpt). Der größte Glasdurchmesser beträgt 0.004 m (4.0 mm), die axiale Glasdicke beträgt 0.002 m (2.0 mm).

Dieses jeweils vor beiden Augen des Benutzers in einer Teleskop-Brille befindliche Miniteleskop-Brillenglas ist mit seiner Brechkraft von 0 Dpt afokal. Es hat für ein normalsichtiges Benutzerauge mit der Dimension des Normalauges die Vergrößerung 2.0095.

Figur 2 d zeigt einen Miniteleskopglas-Einsatz aus hochbrechendem Glas (z.B. La SF 35) mit dem Brechungsindex 2.020 im Längsschnitt.

Die sphärische Vorderflächenkrümmung beträgt 0.00429 m (4.29 mm = +237.92 Dpt), die sphärische Rückflächenkrümmung 0.0005 m (0.5 mm = -2040.00 Dpt). Der Glasdurchmesser beträgt 0.0042 m (4.2 mm), die axiale Glasdicke 0.0075 m (7.5 mm).

Dieses jeweils vor beiden Augen des Benutzers befindliche Miniteleskop-Brillenglas hat die Brechkraft 0 Dpt, d.h. es ist afokal und die Vergrößerung 8.5726 für ein normalsichtiges Auge mit der Dimension des Normalauges.

Es ist möglich, daß durch zukünftige wesentlich verfeinerte Zentrierungsmethoden und -möglichkeiten eines Miniteleskopglas-einsatzes verschiedener Ausgestaltung zur Sehlinie der Augen von Benutzern auch einen Miniteleskopglas-Einsatz mit wesentlich kleinerer sphärischer Innenflächenkrümmung sinnvoll wird. Selbstverständlich müßen auch bei einem solchen Teleskop-Brillenlas die beiden Mittelpunkte der sphärischen Außen- und Innenflächenkrümmungen exakt auf der Mittelachse des Teleskop-Brillenglases liegen, wie es definitionsgemäß für jedes Teleskop-Brillenglas gilt.

Figur 2 e zeigt einen solchen Miniteleskopglas-Einsatz. Eine anschauliche Zeichnung dieses Glases ist wegen der hohen sphärischen Innenkrümmung ausnahmsweise nur vergrößert im Maßstab 10 : 1 möglich.

Die sphärische Vorderflächenkrümmung beträgt 0.00389 m (3.89 mm = +262.40 Dpt), die sphärische Rückflächenkrümmung 0.0001 m (0.1 mm =-10200.00 Dpt). Der größte Glasdurchmesser an der Begrenzung zur Vorderflächenkrümmung beträgt 0.0036 m (3.6 mm), der kleinste Glasdurchmesser an der Begrenzung zur Hinterflächenkrümmung beträgt 0.00018 m (0.18 mm). Die axiale Glasdicke beträgt 0.0075 m (7.5. mm), der Brechungsindex des hochbrechenden Glases beträgt 2.020.

Dieses jeweils vor beiden Augen des Benutzers in einer Brille befindliche Miniteleskop-Brillenglas hat die Brechkraft 0 Dptr, d.h. es ist afokal. Es hat die Vergrößerung 38.86 (38.9 - fach) für ein normalsichtiges Benutzerauge mit der Dimension des Normalauges.

Figur 2 f zeigt einen Miniteleskopglas-Einsatz aus hochbrechendem Glas (Brechungsindex n = 2.020) mit einer so starken Rückflächen- (Innenflächen-)wölbung, daß dieses Glas ausnahmsweise ebenfalls nur vergrößert im Maßstab 10 : 1 im Längsschnitt dargestellt werden kann.

Die sphärische Vorderflächenkrümmung beträgt 0.00111 m (1.11 mm = 919.00 Dpt), die sphärische Rückflächenwölbung beträgt 0.0001 m (0.1 mm =-10200 Dpt). Der größte Glasdurchmesser beträgt 0.0012 m (1.2 mm), der kleinste 0.00018 m (0.18 mm). Die axiale Glasdicke beträgt 0.002 (2.0 mm). Dieses jeweils vor beiden Augen des Benutzers in einer Teleskop-Brille befindliche Miniteleskop-Brillenglas ist mit seiner Brechkraft von 0 Dpt afokal.

Das Glas hat für ein normalsichtiges Benutzerauge mit der Dimension des Normalauges die Vergrößerung 11.10 (11.1 - fach).

## Patentansprüche

1. Brillenglas zum Sehen in die Ferne, bestehend aus einem üblichen Brillenglas oder Planglas und einem darin zentriert angebrachten afokalen bildvergrößerndem Teleskopglas-/teledioptrischen Glas-Einsatz,
dadurch gekennzeichnet, daß
der Teleskopglas-Einsatz an seinem Umfang konusförmig ist,
aus hochbrechendem Glas besteht, und
an der weitesten Stelle des Konus einen Durchmesser von 1.2 bis 6.0 mm,
eine axiale Glasdicke von 2.0 bis 7.5 mm,
eine sphärische Vorderflächenkrümmung mit einem Radius von 1.11 bis 4.29 mm, und
eine sphärische Rückflächenkrümmung mit einem Radius von 0.1 bis 1.5 mm
aufweist."

2. Brillenglas zum Sehen in die Ferne,
dadurch gekennzeichnet, daß
es nach Anspruch 1 aufgebaut ist, daß jedoch in Abweichung hiervon
zum Ausgleich astigmatischer Brechungsfehler von fehlsichtigen Benutzeraugen
die sphärische Vorderfläche des Teleskop-Einsatzes mit entsprechender zusätzlicher torischer Wölbung versehen ist."

## Claims

1. A spectacles glass for far vision comprising:
An usual spectacles glass or a plane spectacles glass and an in in that glass centered and adjusted afocal and magnifying minitelescopic lens insert / miniteledioptric lens insert,
characterised by the means,
that the telescopic insert is cone like on his circumference, that it consists of glass of high refractive power, and that it has on the widest opening a diameter of 1.2 mm up to 6.0 mm, an axial glass thickness of 2.0 mm up to 7.5 mm,
a spherical anterior curvature having a radius of 1.11 mm up to 4.29 mm and a spherical posterior curvature having a radius of 0.1 mm up to 1.5 mm.

2. A spectacles glass for far vision characterised by the means
that it is made following claim "1. but deviating from claim "1., to crrect astigmatic refractive errors of ametropic user's eyes, the spherical anterior surface of the telescopic insert has an additional and appropriate torical curvature.

## Revendications

1. Verre des lunettes pour vision de distance, qui consiste d' un verre de lunettes habituel ou d' un verre de lunettes plan, et d' une insertion de verre de lunettes afocale et téléscopiquee / insertion de verre de lunettes télédioptrique, qui est en centrage dans le verre de lunettes habituel,
characterisé de cette manière,
que l' insertion téléscopique a la forme d' un cone, qu' il consiste des verres de haut pouvoir réfringent et qu' il a un diametre de 1.2 mm jusqu' a 6 mm à la partie la plus large du cone, qu' il a un epaisseur axial du verre de 2.0 mm jusqu' à 7.5 mm, qu'il a une courbure sphérique anterieure avec un rayon de 1.11 mm jusqu' à 4.29 mm, et qu' il a une courbure sphérique posterieure de 0.1 mm jusqu' à 1.5 mm.

2. Verre de lunettes pour vision de distance
characterisé de cette manière,
qu'il est fait suivant les réclamations de brevet ˝1. , mais, pour corriger des erreurs de réfraction toriques des yeux ametropiques des utilisateurs, qu'il dévie des reclamations de brevet ˝1. de cette manière, que la surface anterieure sphérique de l' insertion téléscopique a une courbure additionelle et torique appropriée.
